# EUROPÄISCHE PATENTSCHRIFT

(11) **EP 4 464 531 B1**
(45) Veröffentlichungstag und Bekanntmachung des Hinweises auf die Patenterteilung: **12.08.2026**
(21) Anmeldenummer: 24172596.9
(22) Anmeldetag: 26.04.2024
(51) Int. Cl.: B60K 6/547, H02K 7/116, F16H 3/72

(54) **GETRIEBEANORDNUNG UND LANDWIRTSCHAFTLICHES ZUGFAHRZEUG**
TRANSMISSION ASSEMBLY AND AGRICULTURAL TRACTOR
ENSEMBLE DE TRANSMISSION ET VÉHICULE DE TRACTION AGRICOLE

(30) Priorität: 11.05.2023 DE 102023112521
(43) Veröffentlichungstag der Anmeldung: 20.11.2024
(73) Patentinhaber: Deere & Company, Moline, IL 61265 (US)
(72) Erfinder: Lang, Matthias, Mannheim (DE); Gugel, Rainer, Mannheim (DE); Mueller, David, Mannheim (DE)
(74) Vertreter: Stein, Stefan

(56) Entgegenhaltungen:
- DE-A1- 102015 114 559
- DE-A1- 102016 220 701
- DE-A1- 102017 219 758
- DE-A1- 102020 119 984

## Beschreibung

Die Erfindung betrifft eine Getriebeanordnung gemäß dem Oberbegriff des unabhängigen Anspruchs 1.

Seit langem kommen in landwirtschaftlichen Zugfahrzeugen Getriebeanordnungen zum Einsatz, um den Vortrieb des Zugfahrzeugs auch unter hoher Zuglast, beispielsweise verursacht durch ein daran angebautes Arbeitsgerät wie ein Bodenbearbeitungsgerät (z.B. Pflug) oder dergleichen, über eine bloße Veränderung der Antriebsmotordrehzahl hinaus unterbrechungsfrei verändern zu können. Die Getriebeanordnung kann dabei insbesondere eine unter Last schaltbare Getriebeanordnung sein. Eine bekannte Maßnahme ist es, die Anzahl Gangstufen einer Getriebeanordnung zu erhöhen, indem diese eine Kombination von Getrieben umfasst, beispielsweise durch Kombination einer Getriebeeinrichtung mit einer Getriebeeinheit. Die DE 102013 110 709 A1 offenbart eine solche Getriebeanordnung. Die dabei verwendeten Getriebeeinheiten wiederum können aus der WO 2009/050078 A2 als Doppelkupplungsgetriebe bekannt sein.

Alternativ kann die Getriebeanordnung mit einem Stufenlosgetriebe ausgestattet sein. Stufenlosgetriebe werden leistungsverzweigt mit einem variablen hydraulischen Pfad realisiert. Hierbei wird eingangsseitig ein Teil der Antriebsleistung in hydraulische Leistung umgewandelt. Mittels Variatoren kann der Anteil der hydraulischen Leistung variiert werden. Ausgangsseitig wird die hydraulische Energie wieder in mechanische Energie umgewandelt. Die konstruktive Ausgestaltung dieser Stufenlosgetriebe ist teilweise mit einer hohen Komplexität, Trägheit und störender Geräuschentwicklung verbunden. Die DE 10 2020 119 984 A1 offenbart eine Getriebeeinrichtung, die einen mechanischen Getriebezweig und einen variablen Getriebezweig mit einer magnetisch-elektrischen Umlaufgetriebestufe enthält.

Ausgehend von diesem Stand der Technik ist es daher Aufgabe der vorliegenden Erfindung, eine Getriebeanordnung vorzuschlagen, welche die aus dem Stand der Technik bekannten Nachteile weitgehend vermeiden und konstruktiv einfacher sowie effizienter ausgestaltet sind.

Diese Aufgabe wird durch eine Getriebeanordnung mit den Merkmalen des Patentanspruchs 1 gelöst. Die abhängigen Ansprüche beziehen sich auf besonders vorteilhafte Ausführungsformen der Erfindung.

Gemäß Anspruch 1 wird eine Getriebeanordnung für einen Antriebsstrang eines landwirtschaftlichen Zugfahrzeugs vorgeschlagen, bevorzugt ein Traktor oder Schlepper. Die Getriebeanordnung umfasst eine Eingangswelle, eine Ausgangswelle, eine Getriebeeinrichtung und eine im Leistungsfluss nachgelagerte Getriebeeinheit. Die Getriebeeinheit weist eine erste Kupplung, eine zweite Kupplung und mindestens vier Radsätze zur Einrichtung von Gangstufen auf. Die Getriebeeinrichtung enthält einen mechanischen Getriebezweig und einen variablen Getriebezweig mit einer magnetisch-elektrischen Umlaufgetriebestufe. Die Umlaufgetriebestufe weist einen inneren Rotor, einen äußeren Stator und dazwischen einen magnetischen Modulationsring auf. Der Modulationsring ist mit einer Kupplungsantriebswelle der Kupplungen entweder drehfest verbunden oder antriebsmäßig verbindbar. Durch eine mit der Eingangswelle gekoppelte Elektromaschine wird elektrische Leistung erzeugt, welche teilweise oder vollständig an den Stator der Umlaufgetriebestufe übertragbar ist. Dabei ist der Stator der Umlaufgetriebestufe zur Erzielung einer Rotation des Modulationsringes ansteuerbar.

Die erfindungsgemäße Getriebeanordnung kombiniert in effizienter und kostenoptimierter Weise ein elektrisch leistungsverzweigtes Stufenlosgetriebe mit einer im Leistungsfluss nachgelagerten Getriebeeinheit, welche insbesondere als ein Doppelkupplungsgetriebe ausgebildet ist. Durch den mit einer Kupplungsantriebswelle der Kupplungen drehfest verbundenen oder antriebsmäßig verbindbaren Modulationsring wird am Stufenlosgetriebe vorteilhaft eine einzige Variatorausgangswelle realisiert, was die Komplexität der Getriebeanordnung reduziert.

Der rotierbare Modulationsring bietet die Möglichkeit, unterschiedliche Drehzahlen zur Übertragung an die nachgelagerte Getriebeeinheit zu generieren, ohne dass hierbei nennenswerte physikalische Trägheitsmomente auftreten. Hierdurch können die Schaltvorgänge vorteilhaft deutlich verkürzt werden und die Regelbarkeit der Getriebeanordnung ist signifikant verbessert. Beim Schalten können die beiden (insbesondere lastschaltbaren) Kupplungen der Getriebeeinheit verwendet werden, um eine entsprechende Getriebeeingangswelle der Getriebeeinheit auf die neue Drehzahl zu bringen. Parallel dazu wird der Modulationsring auf die gewünschte neue Drehzahl eingestellt.

Die drehzahlbezogene Einstellung des Modulationsringes erfolgt durch seine rotierbare Lage zwischen dem inneren Rotor und dem äußeren Stator. Um den Modulationsring technisch einfach auf unterschiedliche Drehzahlen einzustellen, wird eine variable elektrische Leistung an den äußeren Stator übertragen. Hierbei kann der äußere Stator mit mindestens einer Statorwicklung ausgestattet sein, deren Erregerfrequenz änderbar bzw. umschaltbar ist. Somit ist der Stator mit unterschiedlichen Erregerfrequenzen ansteuerbar.

Die elektrische Leistung wird von der mit der Eingangswelle gekoppelten Elektromaschine generiert, welche zur Realisierung des elektrischen variablen Getriebezweiges beiträgt. Für eine stabile Generierung elektrischer Leistung kann die Elektromaschine mit der Eingangswelle in einem konstanten Drehzahlverhältnis stehen. Dies wird beispielsweise durch eine Kopplung mit mehreren Zahnrädern zwischen der Eingangswelle und der Elektromaschine erzielt. Alternativ kann ein Rotor der Elektromaschine mit der Eingangswelle drehfest verbunden sein und während des Antriebs der Eingangswelle - insbesondere durch einen Verbrennungsmotor - eine elektrische Leistung generieren.

Ein effizientes Ansprechverhalten des Modulationsringes kann über die Modulation eines elektromagnetischen Feldes zwischen dem inneren Rotor und dem äußeren Stator erfolgen. Hierzu ist der Modulationsring magnetisch, insbesondere mit ferromagnetischen Segmenten, ausgebildet. Der Rotor ist insbesondere magnetisch ausgebildet und weist vorteilhaft eine Anzahl magnetischer Pole bzw. Polpaare auf. Der Stator hat vorzugsweise eine Anzahl elektrischer Pole bzw. Polpaare zur Aufnahme der übertragenen elektrischen Leistung.

Darüber hinaus ist der Stator der Umlaufgetriebestufe vorzugsweise derart ansteuerbar, dass der Modulationsring gesteuert in unterschiedliche Rotationsrichtungen rotierbar ist und folglich die Drehrichtung der Ausgangswelle unterschiedlich eingestellt werden kann. Insbesondere kann die Drehrichtung der Ausgangswelle entgegengesetzt zur Drehrichtung der Eingangswelle eingestellt werden. Ein ansonsten üblicher zusätzlicher Rückwärtsgang in der Getriebeanordnung, insbesondere in der Getriebeeinheit, kann hierdurch entfallen. Die Getriebeanordnung kann dann mit reduzierter Bauteilezahl kompakter und kostengünstiger hergestellt werden und benötigt geringeren Einbauraum sowie geringeren Wartungsaufwand.

In einer bevorzugten Ausführungsform ist zur Übertragung der elektrischen Leistung an den Stator und zu dessen Ansteuerung eine Getriebesteuereinheit vorgesehen. Die Getriebesteuereinheit kann der Getriebeanordnung zugeordnet sein oder die Getriebeanordnung kann die Getriebesteuereinheit umfassen. Die Getriebesteuereinheit kann als ein elektronisches Modul mit einer Leistungselektronik ausgebildet sein. Die Steuereinheit kann eine Recheneinheit, einen Computer, einen Prozessor, einen Speicher und/oder alle Software, Hardware, Algorithmen, Anschlüsse, insbesondere auch Sensoren, umfassen, die für die Ansteuerung des Stators der magnetisch-elektrischen Umlaufgetriebestufe und somit auch für die Steuerung und/oder Regelung des Modulationsringes erforderlich sind. Die Getriebesteuereinheit kann jedes Gerät umfassen, das Daten von verschiedenen Sensoren analysieren, Daten vergleichen und die erforderlichen Entscheidungen treffen kann, um den Betrieb der Getriebeanordnung zu steuern und/oder zu regeln und/oder auszuführen.

Die Getriebesteuereinheit sorgt dafür, dass die von der Elektromaschine generierte elektrische Energie bzw. Leistung in der erforderlichen Weise an den Stator, insbesondere dessen Statorwicklungen, abgegeben wird. Hierbei kann die Getriebesteuereinheit mit einer Leistungselektronik und/oder einem Energiespeicher gekoppelt sein. Die Leistungselektronik und/oder der Energiespeicher kann/können in der Getriebesteuereinheit integriert sein oder als externe Einheit(en) von der Getriebesteuereinheit ansteuerbar sein. Alternativ kann auch eine Batterieeinheit zur Speicherung der von der Elektromaschine generierten elektrischen Energie vorgesehen sein, wobei diese Batterieeinheit von einer geeigneten Steuerelektronik ansteuerbar ist, um elektrische Leistung zu speichern und/oder an den Stator abzugeben.

Weiterhin kann die Getriebesteuereinheit mit weiteren Funktionseinheiten oder Bauteilen der Getriebeanordnung oder des Zugfahrzeugs verbunden sein, bevorzugt signalverbunden und/oder signalübertragend und/oder datenleitend verbunden sein. Die Steuereinheit kann zur Steuerung und/oder Regelung und/oder Ansteuerung der miteinander verbundenen Funktionseinheiten oder Bauteile dienen. Unter einer signalverbundenen und/oder signalübertragenden und/oder datenleitenden Verbindung ist dabei zu verstehen, dass ein Austausch von Signalen zwischen den verbundenen Bauteilen stattfindet. Die Verbindung kann kabelgebunden, insbesondere also mit Kabel, und/oder kabellos, also per Funk, beispielsweise mit Bluetooth realisiert sein. Die Getriebesteuereinheit ist vorzugsweise an einen Kommunikationsbus angeschlossen. Der Kommunikationsbus kann beispielsweise Isobus, CAN-Bus oder ähnliches sein kann. Ausserdem kann mit der Getriebesteuereinheit eine weitere Steuereinheit steuerbar und/oder regelbar sein.

Die Getriebesteuereinheit kann dem Zugfahrzeug zugeordnet, insbesondere am Zugfahrzeug angeordnet sein. Die Getriebesteuereinheit kann aber auch der Getriebeanordnung zugeordnet sein oder die Getriebeanordnung die Getriebesteuereinheit umfassen. Die Getriebesteuereinheit kann auch zweiteilig beispielsweise als Teil des Zugfahrzeugs und als Teil der Getriebeanordnung ausgebildet sein. Die Getriebesteuereinheit kann unmittelbar mit der in einer Kabine des Zugfahrzeugs angeordneten Ein- und Ausgabeeinheit Verbindung stehen, durch welche von einer Bedienperson eingegebene Daten an die Getriebesteuereinheit übertragen oder von dieser empfangen und ausgegeben werden können. Denkbar ist aber auch, dass die Getriebesteuereinheit mittelbar durch eine übergeordnete Steuereinheit mit der Ein- und Ausgabeeinheit verbunden ist.

In der Getriebesteuereinheit werden Signale bzw. Daten verarbeitet. Zumindest teilweise dienen die verarbeiteten Signale bzw. Daten zur erforderlichen Ansteuerung des Stators bzw. der Statorwicklungen. Insbesondere sind die Statorwicklungen als eine oder mehrere Erregerspule(n) wirksam.

Vorzugsweise weist die Getriebeeinheit einen Rückwärtsgang auf. Hierdurch enthält die Getriebeanordnung einen zusätzlichen Rückwärtsgang, insbesondere falls die Möglichkeit eines Rückwärtsbetriebs durch eine entsprechende Ansteuerung des Stators und unterschiedliche Rotationsrichtungen des Modulationsringes nicht gegeben oder nicht ausreichend sein sollte. Eine Integration des Rückwärtsganges in die Getriebeeinheit erleichtert deren Kompatibilität mit der leistungsverzweigten Getriebeeinrichtung.

In einer bevorzugten Ausführungsform ist eine Getriebestufe zur Drehrichtungsumkehr außerhalb der Getriebeeinheit vorgesehen. Diese Alternative zu einem Rückwärtsgang in der Getriebeeinheit reduziert vorteilhaft die Komplexität der Getriebeeinheit. Vorzugsweise ist die Getriebestufe zur Drehrichtungsumkehr im Leistungsfluss entweder zwischen der Elektromaschine und der magnetisch-elektrischen Umlaufgetriebestufe angeordnet oder zwischen der magnetisch-elektrischen Umlaufgetriebestufe und der Getriebeeinheit angeordnet. Die Getriebestufe zur Drehrichtungsumkehr ermöglicht es, einen Vorwärts- und Rückwärtsbetrieb bereitzustellen, ohne dass unterschiedliche Rotationsrichtungen des Modulationsringes realisiert werden müssen.

In einer vorteilhaften Weiterbildung der Erfindung weist die Getriebestufe zur Drehrichtungsumkehr ein Planetengetriebe auf. Die Funktionalität der Drehrichtungsumkehr kann somit in einer kompakten Bauweise bereitgestellt und besonders geräuscharm gestaltet werden. Vorzugsweise wird die Drehrichtungsumkehr am Ausgang bzw. Abtrieb des Planetengetriebes, also insbesondere das Sonnenrad, durch eine entsprechende Ansteuerung einer oder mehrerer auf das Planetengetriebe einwirkenden Bremsvorrichtung(en) unterstützt.

In Ausgestaltung der Erfindung weist die Getriebestufe zur Drehrichtungsumkehr eine dem Planetengetriebe vorgelagerte Kupplungseinrichtung auf. Letztere ermöglicht eine zuverlässige Kraft- und Momentenübertragung entlang des Leistungsflusses im Bereich der Getriebestufe zur Drehrichtungsumkehr. Hierbei weist die Kupplungseinrichtung abtriebsseitig vorzugsweise eine Welle auf, mit welcher ein Sonnenrad des Planetengetriebes bzw. Planetenradsatzes drehfest verbunden ist.

Die Kupplungseinrichtung kann als lastschaltbare Kupplung, bevorzugt als Lamellenkupplung (oder als trockene Einscheibenkupplung), besonders bevorzugt als Reibkupplung ausgebildet sein. Die Kupplungseinrichtung kann aber auch als nicht-lastschaltbare Kupplung ausgebildet sein.

In einer vorteilhaften Weiterbildung der Getriebeanordnung ist im Leistungsfluss zwischen der Elektromaschine und der magnetisch-elektrischen Umlaufgetriebestufe ein Anfahrmodul zum elektrischen Anfahren angeordnet. Dieses Anfahrmodul ist zur wahlweisen Kopplung und Entkopplung einer Antriebsverbindung zwischen der Eingangswelle und/oder der Elektromaschine einerseits und der magnetisch-elektrischen Umlaufgetriebestufe (insbesondere deren Rotor) andererseits ausgebildet. Hierdurch kann der primäre Antrieb (z.B. über Verbrennungsmotor und die Eingangswelle) vom Abtrieb des Zugfahrzeugs vollständig entkoppelt werden. Dies ermöglicht ein rein elektrisches Anfahren über die magnetisch-elektrische Umlaufgetriebestufe, so dass ein hohes Drehmoment an den Abtrieb weitergeleitet werden kann. Vorteilhaft ist das insbesondere in solchen Fällen, in denen das Zugfahrzeug beim Anfahren, also bei geringer Fahrgeschwindigkeit, große Zugkräfte aufbringen muss.

Bei der vorgenannten Entkopplung der Antriebsverbindung kann der Antrieb (z.B. Verbrennungsmotor) der Eingangswelle im Stillstand sein. Alternativ kann der Antrieb (z.B. Verbrennungsmotor) der Eingangswelle in Betrieb sein, so dass beispielsweise weiterhin über die mit der Eingangswelle gekoppelte Elektromaschine Strom erzeugt werden kann.

In Ausgestaltung der Erfindung weist das Anfahrmodul eine Kupplungseinheit auf, welche antriebsseitig mit der Eingangswelle und/oder der Elektromaschine antriebsverbunden ist und abtriebsseitig über eine Rotorantriebswelle mit dem Rotor der magnetisch-elektrischen Umlaufgetriebestufe drehfest verbunden ist. Dies ermöglicht eine technisch stabile Kopplung und Entkopplung der Antriebsverbindung zwischen der Eingangswelle und/oder der Elektromaschine einerseits und der magnetisch-elektrischen Umlaufgetriebestufe (insbesondere deren Rotor) andererseits.

Die antriebsseitige Antriebsverbindung der vorgenannten Kupplungseinheit mit der Eingangswelle ist vorzugsweise drehfest ausgebildet. Die antriebsseitige Antriebsverbindung der vorgenannten Kupplungseinheit mit der Elektromaschine ist beispielsweise formschlüssig (z.B. Zahnradverbindung) ausgebildet.

Alternativ oder zusätzlich zu der vorgenannten Kupplungseinheit weist das Anfahrmodul vorzugsweise eine Kupplungseinheit auf, welche entlang des Leistungsflusses einerseits (z.B. antriebsseitig) über eine Rotorantriebswelle mit dem Rotor der magnetisch-elektrischen Umlaufgetriebestufe drehfest verbunden ist und andererseits (z.B. abtriebsseitig) mit dem Modulationsring drehfest verbunden ist. Eine Kombination der zwei vorgenannten Kupplungseinheiten im Leistungsfluss unterstützt technisch einfach ein elektrisches Anfahren über die magnetisch-elektrische Umlaufgetriebestufe.

Die vorgenannten Kupplungseinheiten können jeweils als lastschaltbare Kupplung, bevorzugt als Lamellenkupplung (oder als trockene Einscheibenkupplung), besonders bevorzugt als Reibkupplung ausgebildet sein. Die Kupplungseinheiten können aber auch als nicht-lastschaltbare Kupplungen ausgebildet sein.

In einer besonders vorteilhaften Ausgestaltung ist die antriebsseitig mit der Eingangswelle und/oder der Elektromaschine antriebsverbundene Kupplungseinheit des Anfahrmoduls als die Kupplungseinrichtung der Getriebestufe zur Drehrichtungsumkehr wirksam. Hierbei ist die Getriebestufe zur Drehrichtungsumkehr im Leistungsfluss zwischen der Elektromaschine und der magnetisch-elektrischen Umlaufgetriebestufe angeordnet. Diese Integration der Getriebestufe zur Drehrichtungsumkehr ermöglicht eine bauteile- und kostensparende Realisierung des Anfahrmoduls. So kann etwa eine ansonsten verwendete Kupplungseinheit des Anfahrmoduls eingespart werden. Die Kupplungseinrichtung der Getriebestufe zur Drehrichtungsumkehr unterstützt dann in einer zusätzlichen Funktion auch die Aufgabe des Anfahrmoduls.

In einer konstruktiv vorteilhaften Ausführungsform ist die Getriebeeinheit derart ausgestaltet, dass deren erste Kupplung mit einer ersten Getriebeeingangswelle drehfest verbunden ist und die zweite Kupplung mit einer zweiten Getriebeeingangswelle drehfest verbunden ist. Auf der ersten und zweiten Getriebeeingangswelle sind Festräder, beispielsweise Zahnräder, drehfest angeordnet. Auf der Ausgangswelle sind Schalträder, beispielsweise Zahnräder oder Gangzahnräder, drehbar gelagert. Die Festräder können insbesondere zumindest teilweise mit den Schalträdern in Eingriff stehen. Von den mindestens vier Radsätzen zur Einrichtung von Gangstufen, insbesondere Gruppengangstufen, weisen ein erster Radsatz und ein zweiter Radsatz jeweils das Festrad an der ersten Eingangswelle und jeweils das Schaltrad an der Ausgangswelle auf. Ein dritter Radsatz und ein vierter Radsatz weisen jeweils das Festrad an der zweiten Getriebeeingangswelle und jeweils das Schaltrad an der Ausgangswelle auf.

Die erste und/oder zweite Kupplung können als lastschaltbare Kupplungen, bevorzugt als Lamellenkupplungen (oder als trockene Einscheibenkupplungen), besonders bevorzugt als Reibkupplungen ausgebildet sein. Die erste und/oder zweite Kupplung können aber auch als nicht-lastschaltbare Kupplungen ausgebildet sein. Die erste und/oder zweite Kupplung und die erste und/oder zweiten Getriebeeingangswellen können achsparallel und/oder koaxial zueinander angeordnet sein.

Abtriebsseitig kann der Getriebeeinheit die Ausgangswelle zugeordnet sein. Die Getriebeeinheit kann eingangsseitig, also als Eingangsseite, bevorzugt als gemeinsame Eingangsseite, eine Kupplungsantriebswelle umfassen. Die Eingangsseite kann aber auch eine erste und zweite Kupplungsantriebswelle umfassen. Die Kupplungsantriebswelle kann als eine Hohlwelle ausgebildet sein. Die erste Kupplung ist zwischen einem geöffneten Zustand, in dem die Kupplungsantriebswelle von der ersten Getriebeeingangswelle antriebsmäßig gelöst ist, und einem geschlossenen Zustand beweglich und/oder schaltbar, in dem die Kupplungsantriebswelle mit der ersten Getriebeeingangswelle in Antriebsverbindung steht. Die zweite Kupplung kann ebenfalls zwischen einem geöffneten Zustand, in dem die Kupplungsantriebswelle von der zweiten Getriebeeingangswelle antriebsmäßig gelöst ist, und einem geschlossenen Zustand beweglich und/oder schaltbar, in dem die Kupplungsantriebswelle mit der zweiten Getriebeeingangswelle in Antriebsverbindung steht. Die erste und/oder zweite Getriebeeingangswelle können mit der Ausgangswelle in Antriebsverbindung gebracht werden. Die erste und/oder zweite Getriebeeingangswelle können als Hohlwellen ausgebildet sein. Ausserdem können die erste und/oder zweite Getriebeeingangswelle zueinander koaxial und/oder ineinander, insbesondere frei drehbar ineinander, angeordnet sein. Die Getriebeeinheit kann eine oder mehrere Luftdruckabdichtungen umfassen, die in die Ausgangswelle und/oder die erste und/oder zweite Getriebeeingangswelle integriert sein können.

Im Speziellen kann die Getriebeeinheit genau zwei Getriebeeingangswellen, die erste und zweite Getriebeeingangswelle, genau eine Ausgangswelle sowie genau zwei Kupplungen umfassen. Ausserdem kann die Getriebeeinheit genau vier Radsätze umfassen. Der erste Radsatz kann ein erstes Festrad der ersten Getriebeeingangswelle umfassen, das mit einem ersten Schaltrad der Ausgangswelle kämmt. Der zweite Radsatz kann ein zweites Festrad der ersten Getriebeeingangswelle umfassen, das mit einem zweiten Schaltrad der Ausgangswelle in Eingriff stehen kann. Der dritte Radsatz kann ein drittes Festrad der zweiten Getriebeeingangswelle umfassen, das mit einem dritten Schaltrad der Ausgangswelle kämmen kann. Der vierte Radsatz kann ein viertes Festrad der zweiten Getriebeeingangswelle umfassen, das mit dem Schaltrad, insbesondere einem vierten Schaltrad, der Ausgangswelle in Eingriff stehen kann.

In weiterer Ausgestaltung der Erfindung umfasst die Getriebeeinheit ein Schaltelement zum Koppeln zweier Schalträder, wobei insbesondere das Schaltelement drehbar auf der Ausgangswelle gelagert sein kann bzw. nicht drehfest mit der Ausgangswelle verbunden sein kann. Das Schaltrad des zweiten Radsatzes und das Schaltrad des dritten Radsatzes sind dabei mit dem Schaltelement derart koppelbar, bevorzugt derart selektiv koppelbar, dass über den zweiten und dritten Radsatz wenigstens eine Windungsgangstufe ausbildbar ist. Das Schaltrad des zweiten Radsatzes und das Schaltrad des dritten Radsatzes können dabei insbesondere in Verbindung mit dem ersten oder vierten Radsatz koppelbar sein, also insbesondere wenn auch der erste oder vierte Radsatz durch ein Koppelelement an der Ausgangswelle festgestellt sind. Mit anderen Worten, das Schaltrad des zweiten Radsatzes und das Schaltrad des dritten Radsatzes und das Schaltelement können derart auf der Ausgangswelle angeordnet sein, und insbesondere mittels des Schaltelements das Schaltrad des zweiten Radsatzes und das Schaltrad des dritten Radsatzes derart verbindbar und lösbar sein, dass zumindest eine Windungsgangstufe über das Schaltelement schaltbar ist. Der Leistungsfluss der Windungsgangstufe kann sich dabei über mindestens drei Radsätze mit miteinander kämmenden Festrädern und Schalträdern winden.

Falls eine Windungsgangstufe geschaltet wird, können zwei der Schalträder, also insbesondere das zweite und dritte Schaltrad, durch das Schaltelement drehfest miteinander verbunden und gleichzeitig der erste oder vierte Radsatz aktiviert sein, also gleichzeitig das erste Schaltrad durch ein erstes Koppelelement oder das vierte Schaltrad durch ein zweites Koppelelement mit der Ausgangswelle verbunden werden. Die Getriebeeinheit kann also im Speziellen sechs Gangstufen oder Gruppengangstufen umfassen, die insbesondere lastschaltbar sind. Die Getriebeeinheit kann also vier Gangstufen aufweisen, die nur über einen Radsatz schaltbar sind und zwei Gangstufen, die als Windungsgangstufen schaltbar sind. Zusätzlich können das zweite und dritte Schaltrad derart koppelbar sein, dass, insbesondere wenn auch der erste oder vierte Radsatz durch ein Koppelelement an der Ausgangswelle festgestellt sind, zwei weitere Gangstufen als Windungsgangstufen realisiert sein können. Bevorzugt können die erste und die sechste Gangstufe ein Windungsgang sein, also als Windungsgangstufe realisiert sein. Die Schrittgrössen zwischen den einzelnen Gangstufen A bis F können konstant sein und/oder in einem Bereich von 1,2 bis 2,4, bevorzugt in einem Bereich von 1,46 bis 2,14 liegen, besonders bevorzugt 1,77 sein.

Die Getriebeeinheit umfasst insbesondere genau ein Schaltelement, insbesondere zum Koppeln der Schalträder des zweiten und dritten Radsatzes. Das Schaltelement kann dazu an der Ausgangswelle zwischen dem zweiten und dritten Radsatz angeordnet sein, und insbesondere auf der Ausgangswelle drehbar gelagert sein. Die zwei Schalträder können mit dem Schaltelement drehfest und lösbar verbindbar sein, wobei die zwei gekoppelten Schalträder insbesondere auf der Ausgangswelle drehbar und/oder lose angeordnet sein können. Dabei können die zwei drehbar gelagerten Schalträder des zweiten und dritten Radsatzes über das Schaltelement derart koppelbar sein, dass in Abhängigkeit von einem Schaltzustand des Schaltelements zwischen den zwei Schalträdern eine drehfeste Verbindung herstellbar ist, sodass die beiden Schalträder mit der gleichen Drehzahl drehbar sind. Mit anderen Worten, die zwei Schalträder können mit dem Schaltelement derart verbunden werden, dass die erste und zweite Getriebeeingangswelle in Abhängigkeit gebracht werden. Im Speziellen werden also bei einer Windungsgangstufe das Schaltrad des zweiten Radsatzes und das Schaltrad des dritten Radsatzes miteinander gekoppelt, um dadurch einen gemeinsamen Kraft- und Leistungsfluss durch die erste und zweite Getriebeeingangswelle zu realisieren.

Vorteilhafterweise werden mit der erläuterten Getriebeeinheit Windungsgangstufen realisiert. Aufgrund der Mehrfachnutzungen einzelner Radsätze sind Bauteileinsparungen beim konstruktiven Aufbau der Getriebeeinheit möglich. Da es sich bei der Getriebeeinheit insbesondere um ein Doppelkupplungsgetriebe mit zwei Windungsgangstufen handelt, das in unterschiedliche Übersetzungen schaltbar ist, bevorzugt sechs Gangstufen schaltbar ist, kann also vorteilhafterweise eine maximale Anzahl an Gangstufen mit einer minimalen Anzahl an Wellen und Zahnrädern in der Getriebeeinheit realisiert werden. Dadurch kann von Vorteil ein minimaler Einbauraum bzw. Bauraum im landwirtschaftlichen Zugfahrzeug und ein optimal konstruktiv einfacher Aufbau der Getriebeeinheit erreicht werden. Vorteilhaft ermöglicht die Getriebeeinheit auch ein Schalten unter Last. Es können ausserdem im Vergleich zu Getriebeeinheiten mit einer vergleichbaren Anzahl an Wellen und Zahnrädern zusätzliche Übersetzungen realisiert werden, sodass mit der erfindungsgemässen Getriebeanordnung eine verbesserte Getriebespreizung und mehr Gangstufen erreicht werden. Ausserdem werden höhere Fahrgeschwindigkeiten und geringe Anfahrgeschwindigkeiten ermöglicht, wodurch mit dem Zugfahrzeug Arbeiten mit langsamen Geschwindigkeiten umgesetzt werden können. Die konstruktiv einfache Art und Weise, in welcher die Getriebeeinheit ausgebildet ist, ermöglicht die Einsparung zusätzlicher Zahnradstufen, wodurch wiederum Gewicht und somit Kraftstoffkosten gespart werden. Ausserdem ermöglicht der geringere Einbauraum, dass das Zugfahrzeug aufgrund des kürzeren Radabstands wendiger und kompakter wird und/oder der eingesparte Einbauraum für andere Funktionen/Baugruppen verwendet werden kann. Ein weiterer wesentlicher Vorteil sind die kürzeren Radsätze, wodurch kürzere Wellen verwendet werden können. Kürzere Wellen wiederum sorgen für weniger Wellendurchbiegung und somit für eine längere Lager- und Verzahnungslebensdauer.

In Ausgestaltung der Erfindung ist das Schaltelement zwischen einer ersten Schaltstellung, in der das Schaltrad des zweiten Radsatzes und das Schaltrad des dritten Radsatzes gekoppelt sind, und einer zweiten Schaltstellung beweglich, in der das Schaltrad des zweiten Radsatzes und das Schaltrad des dritten Radsatzes voneinander gelöst sind. Dadurch werden vorteilhafterweise die oben genannten Vorteile erreicht.

In einem konstruktiv vorteilhaften Ausführungsbeispiel umfasst die Getriebeeinheit eines oder mehrere Koppelelemente, insbesondere genau zwei Koppelelemente, also beispielsweise ein erstes und ein zweites Koppelelement, wobei das Schaltrad mit einem der Koppelelemente mit der Ausgangswelle drehfest und lösbar verbindbar ist, insbesondere jeweils eines der Schalträder mit einem der Koppelelemente mit der Ausgangswelle drehfest und lösbar verbindbar ist.

Das oder die Koppelelemente können drehfest und axial verschiebbar auf der Ausgangswelle gelagert und/oder mittels eines Stellelements bewegbar sein, insbesondere axial bewegbar, und/oder die Koppelelemente sind zwischen jeweils zwei Schalträdern angeordnet, wobei insbesondere die zu den Schalträdern zugehörigen Festräder auf der gleichen Getriebeeingangswelle, also der ersten oder zweiten Getriebeeingangswelle, angeordnet sind.

Die Koppelelemente können in an sich bekannter Form als Klauenkupplungen oder als Stellvorrichtungen, insbesondere Schiebemuffen, und Synchronringe umfassende Schaltpakete bzw. Synchronisierungen ausgebildet sein. In jedem Fall handelt es sich bei den Koppelelementen um drehfest und axial verschieblich auf der Ausgangswelle angeordnete Koppelmittel, mit denen die Schalträder zur Zuschaltung einer Übersetzung drehfest mit der Ausgangswelle verbindbar sind. Die Axialverschiebung der Koppelelemente kann über das Stellelement erfolgen. Dazu kann die Getriebeeinheit entsprechende Stellelemente umfassen oder insbesondere jedes Koppelelement kann jeweils ein Stellelement umfassen.

In Ausgestaltung der Erfindung sind die höchste Gangstufe und die niedrigste Gangstufe als Windungsgangstufe realisiert und/oder die höchste Gangstufe nutzt unter anderem den Radsatz der vorherigen Gangstufe und/oder die niedrigste Gangstufe nutzt unter anderem den Radsatz der nächst höheren Gangstufe. Es sind bei dieser Ausführungsvariante aber auch andere Zuordnungen der Gangstufen in Bezug auf die erste und zweite Kupplung möglich. Insbesondere kann z. B. durch eine Spiegelung eine umgekehrte Zuordnung auf einfachste Weise realisiert werden. Vorteilhafterweise ist mit der Windungsgangstufe in der niedrigsten Gangstufe die Übersetzung ein Produkt aus drei Übersetzungsstufen, wodurch eine größere Übersetzung erzielt werden kann, als nur durch eine Übersetzung durch einen Radsatz. Dadurch wird ein niedrigster Gang mit langsameren Geschwindigkeiten als ohne Windungsgangstufe ermöglicht. Von Vorteil ist weiter, dass zusätzlich in Kombination mit der Windungsgangstufe in der höchsten Gangstufe die Übersetzung ebenfalls ein Produkt aus drei Übersetzungsstufen ist und in der höchsten Gangstufe höhere Geschwindigkeiten erreicht werden können, als ohne Windungsgangstufe. Dadurch wird ein höchster Gang mit höheren Geschwindigkeiten als ohne Windungsgangstufe ermöglicht.

In Ausgestaltung der Erfindung umfasst die Getriebeeinheit sechs Gangstufen, bevorzugt genau nur sechs Gangstufen, besonders bevorzugt genau nur sechs lastschaltbare Gangstufen, und/oder der erste und der sechste Gang, also der niedrigste und höchste Gang, sind als Windungsgangstufe realisiert. Hierdurch wird vorteilhafterweise eine optimale Getriebe-Abstufung erzielt, die für die komplette Bandbreite der Arbeitsbereiche von landwirtschaftlichen Zugfahrzeugen ideal ist.

In einer besonders vorteilhaften Ausgestaltung ist ein Hinterachskegeltrieb mit der Ausgangswelle verbunden, insbesondere drehfest verbunden. Vorteilhafterweise können aufgrund der direkten Verbindung der Ausgangswelle mit dem Hinterachskegeltrieb teure und wartungsanfällige Verbindungselemente, beispielsweise eine Gelenkwelle, eingespart werden. Ausserdem ist die Ausgangswelle vorzugsweise mit einer Verzahnung eines Vorderachsantriebs in Verbindung. Dazu kann ein Vorderachsantriebsrad mit der Ausgangswelle in Verbindung stehen, insbesondere mit der Ausgangswelle drehfest verbunden oder wahlweise drehfest verbindbar und lösbar sein. Vorteilhafterweise kann somit der Vorderachsantrieb mit dem Hinterachskegeltrieb mittels der Ausgangswelle verbunden sein kann. Ausserdem übernimmt von Vorteil die Ausgangswelle zusätzlich die Funktion der Verbindung einer vorderen und hinteren Fahrzeugachse, wodurch ein weiteres Verbindungselement eingespart werden kann. Ebenso kann die Ausgangswelle mit einem Parksperrenrad in Verbindung stehen.

In Ausgestaltung der Erfindung ist das Ritzel des Hinterachskegeltriebs als Teil der Ausgangswelle ausgebildet, insbesondere in die Ausgangswelle integriert. Vorteilhafterweise kann dadurch eine sehr kompakte Bauweise erreicht, welche Bauraum und Getriebelänge einspart.

Eine vorteilhafte Weiterbildung der Getriebeanordnung sieht vor, dass in der ersten und zweiten Getriebeeingangswelle eine Zapfwellen-Antriebswelle (PTO-Antriebswelle) angeordnet ist. Die Zapfwellen-Antriebswelle kann als Vollwelle ausgeführt sein. Die Getriebeeinheit, insbesondere aber auch die Getriebeanordnung, kann also eine Wellendurchführung für einen Zapfwellenantrieb des landwirtschaftlichen Fahrzeugs aufweisen. Dazu können die erste und zweite Getriebeeingangswelle der Getriebeeinheit und/oder die Kupplungsantriebswelle als Hohlwelle ausgeführt sein und die Zapfwellen-Antriebswelle zum Antrieb eines Zapfwellengetriebes in sich aufnehmen. Zweckmäßigerweise können auch die erste und zweite Kupplung einen zentralen Durchgang für die Zapfwellen-Antriebswelle aufweisen. Auf diese Weise ist eine direkte und damit besonders energieeffiziente Antriebsleistungsübertragung vom Antriebsmotor zu einem Zapfwellenabtrieb des Traktors möglich.

Eine vorteilhafte Weiterbildung der Erfindung betrifft ein landwirtschaftliches Zugfahrzeug, bevorzugt ein Traktor oder Schlepper, mit einer Getriebeanordnung nach einem der Ansprüche 1 bis 14. Das landwirtschaftliche Zugfahrzeug kann ausserdem einen Antriebsmotor, insbesondere Verbrennungsmotor, umfassen. Dabei kann die Getriebeanordnung vom Antriebsmotor antreibbar sein und mit zumindest einer Fahrzeugachse des Zugfahrzeugs in Antriebsverbindung stehen und/oder kann mit einer weiteren Fahrachse des Zugfahrzeugs in Antriebsverbindung bringbar sein. Das erfindungsgemässe Zugfahrzeug weist die oben beschriebenen Vorteile der erfindungsgemässen Getriebeanordnung auf.

Die erfindungsgemässe Getriebeanordnung ermöglicht eine effiziente Kombination einer leistungsverzweigten Getriebeeinrichtung mit einer nachgelagerten Getriebeeinheit, welche als Volllastschaltgetriebe ausgebildet sein kann. Die im Rahmen der erfindungsgemässen Getriebeanordnung verwendete Getriebeeinheit weist vorteilhafterweise gegenüber den konventionellen Lastschaltgetrieben (PST, powershift), wie sie in großen Zugfahrzeugen Anwendung finden, eine deutlich schlankere Bauweise auf und kommt mit weniger Bauraum, sowie Gewicht und rotierender Massenträgheit aus. Die Bauweise ist dadurch kostengünstiger und kraftstoffsparender aufgrund des besseren Wirkungsgrads. Gegenüber diversen Teillastschaltgetrieben (PPST, partial powershift), wie sie in diversen mittleren und kleineren Zugfahrzeugen Anwendung finden, findet hierbei eine Verbesserung der Funktionalität hin zu volllastschaltbaren Getrieben statt. Von Vorteil ist insbesondere beim Umschalten von einer Gruppe zur nächsten keine Unterbrechung der Zugkraft mehr vorhanden und die Arbeit kann bei voller Last fortgesetzt werden, sowohl im Feld als auch im Transport. Dies geschieht mit reduziertem Zusatzgewicht und Bauraumanforderungen, insbesondere verglichen mit konventionellen vollastschaltbaren Getrieben und trotz Erreichen der gleichen Leistungsstärke.

Die erfindungsgemäße Getriebeanordnung wird im Folgenden anhand der beigefügten Zeichnungen näher erläutert. Dabei sind hinsichtlich ihrer Funktion übereinstimmende bzw. vergleichbare Bauteile mit denselben Bezugszeichen gekennzeichnet. Es zeigen:
- Fig. 1: eine schematische Darstellung eines landwirtschaftlichen Zugfahrzeugs, und
- Fig. 2: eine schematische Darstellung eines ersten Ausführungsbeispiels der erfindungsgemäßen Getriebeanordnung, und
- Fig. 3: eine schematische Darstellung eines weiteren Ausführungsbeispiels der erfindungsgemäßen Getriebeanordnung, und
- Fig. 4: eine schematische Darstellung eines weiteren Ausführungsbeispiels der erfindungsgemäßen Getriebeanordnung, und
- Fig. 5: eine schematische Darstellung eines weiteren Ausführungsbeispiels der erfindungsgemäßen Getriebeanordnung.

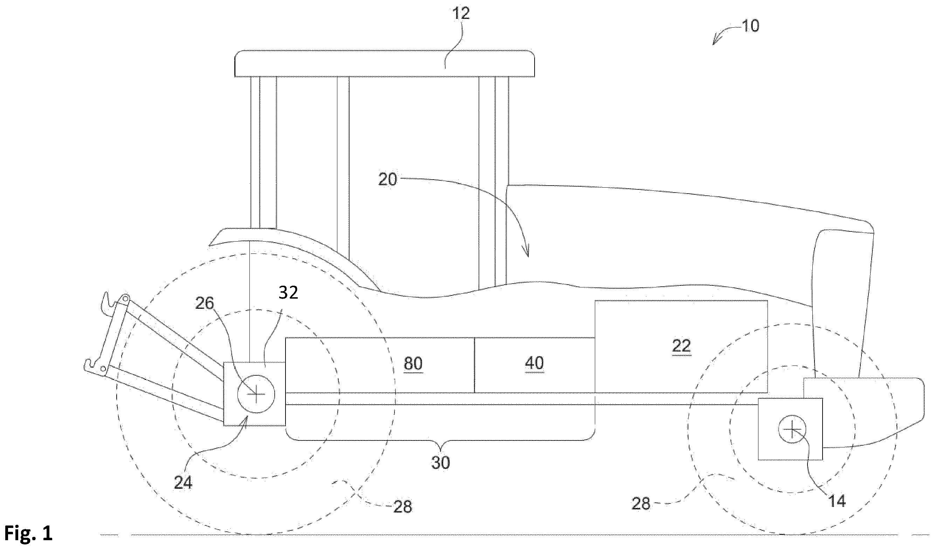

Figur 1 zeigt eine schematische Darstellung eines landwirtschaftlichen Zugfahrzeugs 10, insbesondere in Gestalt eines Traktors, mit einem Antriebsstrang 20 in einer möglichen Ausgestaltung. Der grundsätzliche Aufbau eines landwirtschaftlichen Zugfahrzeugs 10 wird als dem Fachmann bekannt angenommen. Das Zugfahrzeug 10 umfasst ferner eine Kabine 12, eine vordere Fahrzeugachse 14 und eine hintere Fahrzeugachse 26. Die vordere Fahrzeugachse 14 und die hintere Fahrzeugachse 26 sind Teil des Antriebsstrangs 20, wobei die hintere Fahrzeugachse 26 in der Regel permanent und die vordere Fahrzeugachse 14 in der Regel bedarfsweise zuschaltbar angetrieben werden können.

Der Antriebsstrang 20 umfasst ferner einen Antriebsmotor 22, der als Verbrennungskraftmaschine ausgeführt sein kann, und eine Getriebestruktur, die, wie nachfolgend beschrieben, aus verschiedenen einzelnen Getriebekomponenten zusammengesetzt sein kann. Die vorliegend beschriebene Getriebestruktur kann im Kraft- und Momentenfluss, ausgehend vom Antriebsmotor 22, eine erfindungsgemäße Getriebeanordnung 30, einen Fahrantrieb 24 und ein hinteres Achsgetriebe 32 aufweisen. Die Getriebeanordnung 30 umfasst eine Getriebeeinrichtung 40 und eine Getriebeeinheit 80. Dabei ist die Getriebeeinrichtung 40 dem Antriebsmotor 22 nachgelagert. Die Getriebeeinrichtung 40 ist mit dem Antriebsmotor 22 antriebsverbunden und/oder kann mit dem Antriebsmotor 22 antreibbar sein. Die Getriebeeinheit 80 ist der Getriebeeinrichtung 40 nachgelagert. Dabei ist die Getriebeeinheit 80 mit der Getriebeeinrichtung 40 antriebsverbunden und/oder mit der Getriebeeinrichtung 40 antreibbar.

Mit der gezeigten Getriebeanordnung 30 lässt sich Antriebsleistung des Antriebsmotors 22 mit unterschiedlichen Gangstufen auf die Ausgangswelle der Getriebeeinheit 80 übertragen. Die mit der Ausgangswelle in Antriebsverbindung stehende hintere Fahrzeugachse 26, welche eine Drehung der vorderen und/oder hinteren Fahrzeugachse (über damit verbundene Bodeneingriffsmittel) in einen Vorschub des Traktors wandelt, wird daher abhängig von einer in der Getriebeanordnung 30 gewählten Gangstufe mit unterschiedlicher Drehzahl angetrieben. Folglich ist ein mit der Getriebeanordnung 30 ausgestatteter Traktor abhängig von der in der Getriebeanordnung 30 gewählten Gangstufe in unterschiedlichen Geschwindigkeitsbereichen bewegbar.

Das Zugfahrzeug 10 kann eines oder mehrere Bodeneingriffsmittel in Form von Rädern 28 aufweisen, welche mit einem Untergrund zur Übertragung von Antriebskräften in Eingriff stehen und/oder durch die sich das Zugfahrzeug 10 auf dem Untergrund abstützt. Das Zugfahrzeug 10 kann außerdem ein Fahrgestell aufweisen, wobei das Fahrgestell insbesondere von den an der vorderen und hinteren Fahrzeugachse 14, 26 aufgehängten Rädern getragen werden kann.

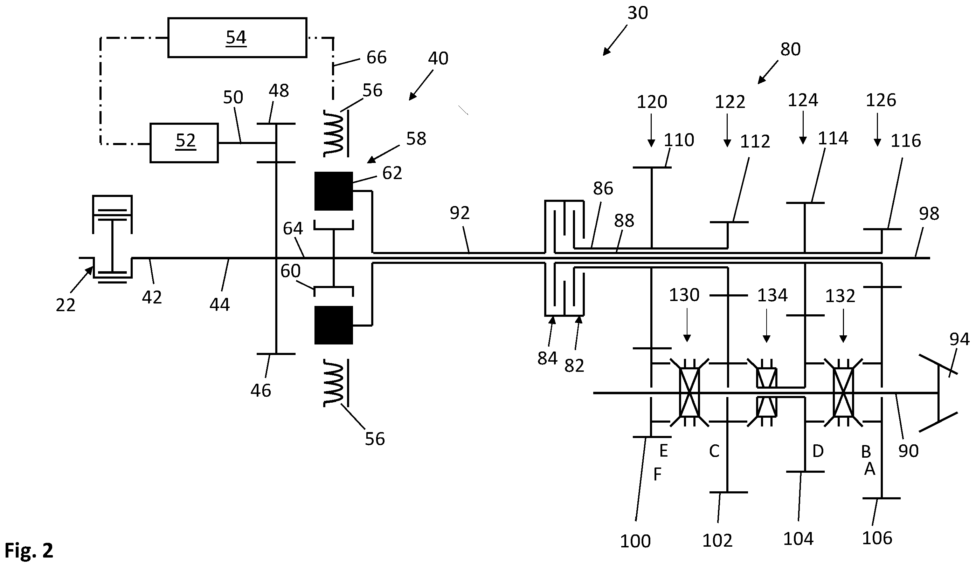

Figur 2 zeigt eine schematische Darstellung, insbesondere ein Strichdiagramm, eines ersten Ausführungsbeispiels der erfindungsgemäßen Getriebeanordnung 30. Die in Figur 2 gezeigte Getriebeanordnung 30 ist eine detaillierte schematische Darstellung der in Figur 1 gezeigten Getriebeanordnung 30. Im Folgenden wird deshalb lediglich auf in Figur 1 nicht gezeigte Details eingegangen. Wie bereits erwähnt, umfasst die Getriebeanordnung 30 die Getriebeeinrichtung 40 und die im Leistungsfluss nachgelagerte Getriebeeinheit 80.

Die Getriebeeinheit 80 enthält eine erste Kupplung 82 und eine zweite Kupplung 84, deren Eingangsseite, insbesondere gemeinsame Eingangsseite, antreibbar ist.

Die Getriebeeinheit 80 umfasst weiter eine erste Getriebeeingangswelle 86 und eine zweite Eingangswelle 88 und eine Ausgangswelle 90, insbesondere genau nur eine Ausgangswelle 90. Die Ausgangsseite der ersten Kupplung 82 ist mit der ersten Eingangswelle 86 verbunden, insbesondere ist die erste Kupplung 82 mit der ersten Getriebeeingangswelle 86 drehfest verbunden. Die Ausgangsseite der zweiten Kupplung 84 ist mit der zweiten Getriebeeingangswelle 88 verbunden, insbesondere ist die zweite Kupplung 84 mit der zweiten Getriebeeingangswelle 88 drehfest verbunden. Die Getriebeeinheit 80 umfasst als Eingangsseite eine Kupplungsantriebswelle 92. Die erste und zweite Kupplung 82, 84 sind zwischen einem geöffneten Zustand, in dem die Kupplungsantriebswelle 92 von der ersten und/oder zweiten Getriebeeingangswelle 86, 88 antriebsmäßig gelöst ist, und einem geschlossenen Zustand beweglich oder schaltbar, in dem die Kupplungsantriebswelle 92 mit der ersten und/oder zweiten Getriebeeingangswelle 86, 88 in Antriebsverbindung steht.

Darüber hinaus ist mit der Ausgangswelle 90 ein Hinterachskegeltrieb 94 verbunden. Das Ritzel des Hinterachskegeltriebs 94 kann dabei als Teil der Ausgangswelle 90 ausgebildet sein, insbesondere in die Ausgangswelle 90 integriert sein.

Ausserdem sind die erste und/oder zweite Getriebeeingangswelle 86, 88 als Hohlwelle ausgebildet und die zweite Getriebeeingangswelle 88 ist in der ersten Getriebeeingangswelle 86 angeordnet. Darüber hinaus nehmen die erste und/oder zweite Getriebeeingangswelle 86, 88 eine Zapfwellen-Antriebswelle 98 zum Antrieb eines Zapfwellengetriebes in sich auf.

Auf der Ausgangswelle 90 sind vier Schalträder 100, 102, 104, 106 drehbar gelagert. Auf der ersten und zweiten Getriebeeingangswelle 86, 88 sind insgesamt vier Festräder 110, 112, 114, 116 drehfest angeordnet, insbesondere drehfest mit der ersten und zweiten Getriebeeingangswelle 86, 88 verbunden. Dabei sind der ersten und der zweiten Getriebeeingangswelle 86, 88 jeweils zwei Festräder zugeordnet. Diese kämmen jeweils mit einem der Ausgangswelle 90 zugeordneten Schalträdern 100, 102, 104, 106. Die Getriebeeinheit 80 weist mehrere Radsätze, insbesondere vier Radsätze 120, 122, 124, 126, zur Einrichtung von Gangstufen B, C, D, E auf. Dazu weisen mindestens ein erster Radsatz 120 und ein zweiter Radsatz 122 jeweils das Festrad 110, 112 an der ersten Eingangswelle 86 und jeweils das Schaltrad 100, 102 an der Ausgangswelle 90 auf. Ausserdem weisen mindestens ein dritter Radsatz 124 und ein vierter Radsatz 126 jeweils das Festrad 114, 116 an der zweiten Eingangswelle 88 und jeweils das Schaltrad 104, 106 an der Ausgangswelle 90 auf. Im Speziellen umfasst der erste Radsatz 120 ein erstes Festrad 110, das mit einem ersten Schaltrad 100 auf der Ausgangswelle 90 kämmt. Der zweite Radsatz 122 umfasst ein zweites Festrad 112 das mit einem zweiten Schaltrad 102 in Eingriff steht. Der dritte Radsatz 124 umfasst ein drittes Festrad 114, das mit einem dritten Schaltrad 104 kämmt. Der vierte Radsatz 126 umfasst ein viertes Festrad 116, das mit einem vierten Schaltrad 106 in Eingriff steht.

Die Dimensionierung der Radsätze 120, 122, 124, 126 ist im Verhältnis zueinander nicht zwangsläufig maßstäblich. Vielmehr können die tatsächlichen Radien der Festräder 110, 112, 114, 116 und der Schalträder 100, 102, 104, 106 anders und in einer für die Getriebeeinheit 80 sowie die Getriebeanordnung 30 geeigneten Weise dimensioniert sein.

Die Getriebeeinheit 80 umfasst weiter genau zwei Koppelelemente 130, 132, also ein erstes Koppelelement 130 und ein zweites Koppelelement 132. Das erste Koppelelement 130 ist zwischen dem ersten und zweiten Radsatz 120, 122 und das zweite Koppelelement 132 ist zwischen dem dritten und vierten Radsatz 124, 126 auf der Ausgangswelle 90 angeordnet. Die Schalträder 100, 102, 104, 106 sind mittels des ersten oder zweiten Koppelelements 130, 132 mit der Ausgangswelle 90 drehfest und lösbar verbindbar. Im Speziellen sind also das erste Schaltrad 100 oder das zweite Schaltrad 102 mittels des ersten Koppelelements 130 mit der Ausgangswelle 90 drehfest und lösbar verbindbar. Ausserdem sind das dritte Schaltrad 104 oder das vierte Schaltrad 106 mittels des zweiten Koppelelements 132 mit der Ausgangswelle 90 drehfest und lösbar verbindbar. Somit ist jeweils ein Koppelelement 130, 132 zwischen jeweils zwei Schalträdern 100, 102, 104, 106 angeordnet. Das erste und zweite Koppelelement 130, 132 sind drehfest und axial verschiebbar auf der Ausgangswelle 90 gelagert. Das erste und zweite Koppelelement 130, 132 sind als Schaltpakete ausgebildet, die Stellvorrichtungen, insbesondere Schiebemuffen, und Synchronringe umfassen. Dadurch sind die drehbar gelagerten Schalträder 100, 102, 104, 106 über die Koppelelemente 130, 132 schaltbar, so dass abhängig von einem Schaltzustand der Koppelelemente 130, 132 zwischen der Ausgangswelle 90 und der jeweiligen ersten und/oder zweiten Getriebeeingangswelle 86, 88 jeweils ein festes Drehzahlverhältnis herstellbar ist.

Die Getriebeeinheit 80 umfasst ausserdem ein Schaltelement 134 zum Koppeln zweier Schalträder 102, 104. Im Speziellen sind das zweite und dritte Schaltrad 102, 104 mit dem Schaltelement 134 koppelbar. Das zweite und dritte Schaltrad 102, 104 sind mit dem Schaltelement 134 drehfest und lösbar verbindbar. Das zweite und dritte Schaltrad 102, 104 sind mit dem Schaltelement 134 derart koppelbar, insbesondere derart selektiv koppelbar, dass über den zweiten und dritten Radsatz 122, 124 wenigstens eine Windungsgangstufe A, F ausbildbar ist, d. h. insbesondere also die erste und zweite Getriebeeingangswelle 86, 88 miteinander koppelbar sind. Mit anderen Worten, das Schaltelement 134 kann insbesondere zwischen einer ersten Schaltstellung, in der das zweite Schaltrad 104 und das dritte Schaltrad 102 gekoppelt sind, und einer zweiten Schaltstellung beweglich sein, in der das zweite Schaltrad 104 und das dritte Schaltrad 102 voneinander gelöst sind. Das Schaltelement 134 ist als eine einseitig wirkende Synchronisierung ausgebildet. Das Schaltelement 134 ist zwischen dem ersten und zweiten Koppelelement 130, 132 entlang der Ausgangswelle 90 angeordnet.

Abhängig vom Schaltzustand der ersten und zweiten Kupplung 82, 84 sowie vom Schaltzustand des ersten und zweiten Koppelelements 130, 132 und des Schaltelements 134 kann die Getriebeeinheit 80 mit jede der Kupplungen 82, 84 in jeweils zwei Gangstufen, also insgesamt vier Gangstufen B, C, D, E, und jeweils eine zusätzliche Gangstufe als Windungsgangstufe A,F, also insgesamt zwei Windungsgangstufen A, F, und somit in insgesamt sechs Gangstufen bzw. Gruppengangstufen geschaltet werden. Dabei kann die Getriebeeinheit 80 unter Last geschaltet werden, indem während des Öffnens der einen Kupplung, beispielsweise der ersten Kupplung 82, die andere Kupplung, beispielsweise die zweite Kupplung 84, geschlossen wird, so dass eine zwischen der ersten oder zweiten Getriebeeingangswelle 86, 88 und der Kupplungsantriebswelle 92 bestehende Antriebsverbindung durch eine über die jeweils andere Getriebeeingangswelle 86, 88 herzustellende Antriebsverbindung ersetzbar ist, ohne eine Antriebsverbindung zwischen der ersten oder zweiten Getriebeeingangswelle 86, 88 und Ausgangswelle 90 zu unterbrechen. Zur Vorwahl einer gewünschten Gangstufe wird das betreffende Schaltrad, also insbesondere das erste bis vierte Schaltrad 100, 102, 104, 106, durch das jeweils zugeordnete erste oder zweite Koppelelement 130, 132 drehfest mit der Ausgangswelle 90 verbunden, sodass die Gangstufen B, C, D, E realisiert werden. Falls eine Gangstufe A, F als Windungsgangstufe geschaltet wird, werden das zweite und dritte Schaltrad 102, 104 durch das Schaltelement 134 drehfest miteinander verbunden und gleichzeitig die Gangstufen E oder B aktiviert, also gleichzeitig das erste Schaltrad 100 durch das erste Koppelelement 130 (Gangstufe E) oder das vierte Schaltrad 106 durch das zweite Koppelelement 132 mit der Ausgangswelle 90 (Gangstufe B) verbunden. Somit läuft jede Windungsgangstufe über drei Radsätze. Die Getriebeeinheit 80 umfasst also sechs Gangstufen, die insbesondere lastschaltbar sind. Im Speziellen sind die erste und die sechste Gangstufe A, F ein Windungsgang, also als Windungsgangstufe realisiert.

Die Getriebeanordnung 30 umfasst im Wesentlichen zwei Funktionsgruppen, die jeweils über Wellen miteinander in Antriebsverbindung stehen. Eingangsseitig der Getriebeanordnung 30 ist die Getriebeeinrichtung 40 angeordnet. Die Getriebeeinrichtung 40 kann in Antriebsverbindung mit dem Antriebsmotor 22 stehen und vom Antriebsmotor 22 antreibbar sein. Die Getriebeeinrichtung 40 steht über die Kupplungsantriebswelle 92, die als eine Hohlwelle ausgebildet ist, mit der Getriebeeinheit 80 in Antriebsverbindung. Die Getriebeeinheit 80 weist ausgangsseitig die Ausgangswelle 90 auf, die zugleich Abtriebswelle der Getriebeanordnung 30 ist.

Eine Motorabtriebswelle 42 am Verbrennungsmotor 22 ist entlang des Leistungsflusses insbesondere drehfest verlängert und bildet in dieser Verlängerung eine Eingangswelle 44 für die Getriebeanordnung 30. Die Eingangswelle 44 kann die Zapfwellen-Antriebswelle 98 mit Antriebsleistung versorgen und ist hierzu in Axialrichtung als durchgehende Welle ausgebildet.

An der Eingangswelle 44 ist ein Antriebsrad 46 drehfest angeordnet, welches mit einem weiteren Antriebsrad 48 kämmt. Das Antriebsrad 48 ist drehfest an einer Antriebswelle 50 angeordnet, welche in einer, insbesondere lösbaren, Antriebsverbindung mit einer Elektromaschine 52 steht. Dadurch können der Verbrennungsmotor 22 und die Elektromaschine in einem konstanten Drehzahlverhältnis stehen. Solange die Elektromaschine 52 mit der Eingangswelle 44 in Antriebsverbindung steht, wird anteilig mechanische Energie bzw. Leistung des Verbrennungsmotors in elektrische Energie bzw. Leistung umgewandelt. Der verbleibende mechanische Anteil in der Eingangswelle 44 wird durch diese weitergeleitet. Von der Elektromaschine 52 generierte elektrische Leistung kann von einer Getriebesteuereinheit 54 gesteuert variabel an einen Stator 56 einer magnetisch-elektrischen Umlaufgetriebestufe 58 übertragen werden. Die Getriebesteuereinheit 54 kann mit einer Leistungselektronik und/oder einer Batterieeinheit kombiniert sein oder eine solche Leistungselektronik und/oder Batterieeinheit umfassen. Abhängig vom Leistungsbedarf am Stator 56 kann die elektrische Leistung der Elektromaschine 52 zunächst zwischengespeichert werden oder direkt an den Stator 56 weitergeleitet werden.

Die magnetisch-elektrische Umlaufgetriebestufe 58 weist den äußeren Stator 56, einen inneren Rotor 60 und dazwischen einen rotierbaren magnetischen Modulationsring 62 auf. Der innere Rotor 60 ist drehfest mit der Eingangswelle 44 verbunden. Der Modulationsring 62 ist mit der als Hohlwelle ausgebildeten Kupplungsantriebswelle 92 drehfest verbunden oder zumindest antriebsmäßig verbindbar. Die Kupplungsantriebswelle 92 umgibt die durchgehende Eingangswelle 44.

Der Aufbau der Getriebeeinrichtung 40 ist leistungsverzweigt mit einem mechanischen Getriebezweig 64 im Bereich der durchgehenden Eingangswelle 44 und mit einem elektrischen bzw. variablen Getriebezweig 66, welcher die magnetisch-elektrische Umlaufgetriebestufe 58 enthält. Sowohl der rotierende Rotor 60 als auch der elektrisch angesteuerte Stator 56 beeinflussen die Rotation des Modulationsringes 62. Hierdurch kann variabel eine abgehende Drehzahl und ein abgehendes Drehmoment am Modulationsring 62 eingestellt werden. Dies wird während der Schaltvorgänge der Getriebeeinheit 80 dazu genutzt, den Umschaltvorgang schneller ablaufen zu lassen und den Schaltkomfort zu verbessern. Ausgehend von dem Schaltvorgang in der Getriebeeinheit 80 wird parallel die Drehzahl bzw. die Antriebsleistung an der Kupplungsantriebswelle 92 angepasst, indem durch die Getriebesteuereinheit 54 eine Änderung der Erregerfrequenz der Wicklung(en) am äußeren Stator 56 erfolgt. Bei dieser Änderung entsteht im Wesentlichen kein Trägheitsmoment, so dass eine Veränderung des Trägheitsmoments der Getriebeanordnung sehr klein gehalten wird und Geschwindigkeitsänderungen während der Schaltvorgänge nicht mehr wahrnehmbar sind. Die trägheitslose Drehzahländerung an dem Modulationsring trägt dazu bei, einen harmonischen ruckfreien Betrieb während der Schaltvorgänge zu erreichen.

Die variable Einstellung des rotierbaren Modulationsringes 62 durch die Getriebesteuereinheit 54 ermöglicht auch eine Drehrichtungsumkehr des Modulationsringes 62. Mit anderen Worten ist der Stator 56 zur Erzielung einer zur Drehrichtung der Eingangswelle 44 entgegengesetzten Drehrichtung der Ausgangswelle 90 ansteuerbar, so dass durch die Umlaufgetriebestufe 58 ein Vorwärts- und Rückwärtsbetrieb der Getriebeanordnung 30 möglich ist.

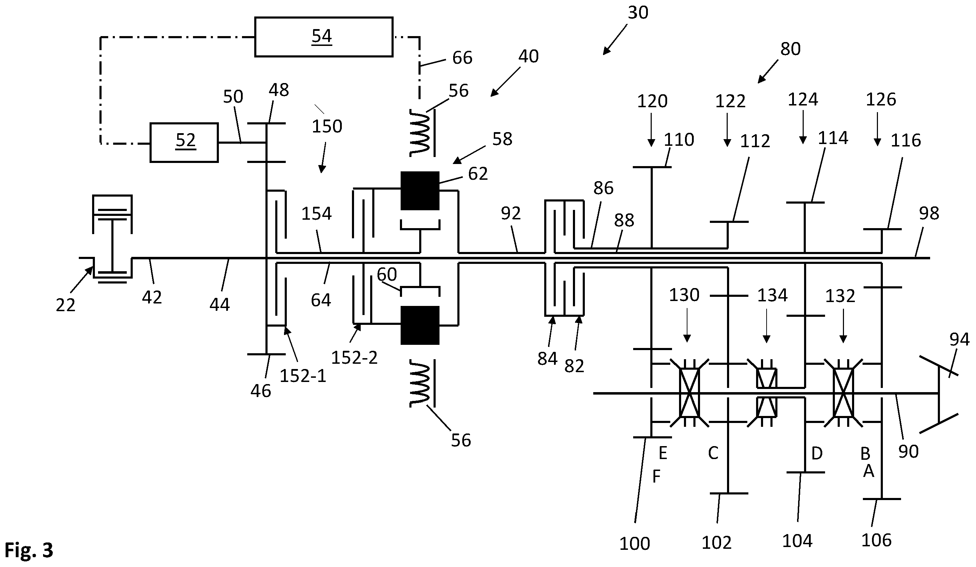

Figur 3 zeigt eine schematische Darstellung, insbesondere ein Strichdiagramm, eines weiteren Ausführungsbeispiels der erfindungsgemäßen Getriebeanordnung 30. Die Getriebeeinheit 80 entspricht hier im Wesentlichen der in Figur 2 gezeigten Getriebeeinheit 80, so dass im Folgenden lediglich auf Details und/oder Unterschiede in der Getriebeeinrichtung 40 eingegangen wird. In Figur 3 ist im Leistungsfluss zwischen der Elektromaschine 52 und der elektrischmagnetischen Umlaufgetriebestufe 58 ein Anfahrmodul 150 zum elektrischen Anfahren angeordnet. Zu diesem Zweck weist das Anfahrmodul 150 eine erste Kupplungseinheit 152-1 und eine zweite Kupplungseinheit 152-2 auf. Die erste Kupplungseinheit 152-1 ist antriebsseitig mit der Eingangswelle 44 drehfest verbunden und abtriebsseitig über eine als Hohlwelle ausgebildete Rotorantriebswelle 154 mit dem Rotor 60 der Umlaufgetriebestufe 58 drehfest verbunden. Die zweite Kupplungseinheit 152-2 ist entlang des Leistungsflusses einerseits mit der Rotorantriebswelle 154 drehfest verbunden und andererseits mit dem Modulationsring 62 drehfest verbunden.

Mit der ersten Kupplungseinheit 152-1 kann wahlweise eine Kopplung und Entkopplung der, insbesondere mechanischen, Antriebsverbindung zwischen der Eingangswelle 44 und der Umlaufgetriebestufe 58 realisiert werden. In einem geschlossenen Zustand der ersten Kupplungseinheit 152-1 sind die Eingangswelle 44 und der Rotor 60 über die Rotorantriebswelle 154 miteinander in Antriebsverbindung, so dass der mechanische Getriebezweig 64 für den Modulationsring 62 wirksam ist.

Bei dem in Figur 3 dargestellten geöffneten Zustand der ersten Kupplungseinheit 152-1 ist der Modulationsring 62 von dem mechanischen Getriebezweig 64 entkoppelt, was ein rein elektrisches Anfahren über den variablen Getriebezweig 66 ermöglicht. Hierbei wird durch die Getriebesteuereinheit 54 und/oder über eine Batterieeinheit elektrische Energie an den Stator 56 übertragen. Insbesondere wird dabei auch ein konstantes Drehzahlverhältnis zwischen dem Rotor 60 und dem Modulationsring 62 hergestellt. Dies wird durch eine entsprechende Ansteuerung der zweiten Kupplungseinheit 152-2 erreicht. Das elektrische Anfahren ist besonders vorteilhaft bei hohen Anhängelasten, die bei geringen Fahrgeschwindigkeiten üblicherweise eine starke Untersetzung erfordern, um anzufahren.

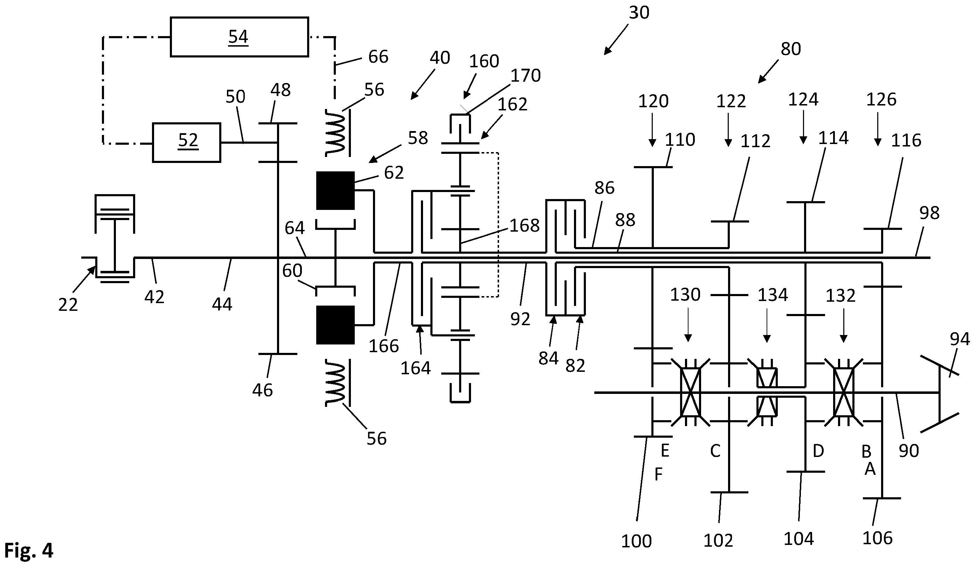

Figur 4 zeigt eine schematische Darstellung, insbesondere ein Strichdiagramm, eines weiteren Ausführungsbeispiels der erfindungsgemäßen Getriebeanordnung 30. Sie unterscheidet sich von der Getriebeanordnung 30 gemäß Figur 2 im Wesentlichen dadurch, dass im Leistungsfluss zwischen der Umlaufgetriebestufe 58 und der Getriebeeinheit 80 eine Getriebestufe 160 zur Drehrichtungsumkehr angeordnet ist. Die Getriebestufe 160 weist ein Planetengetriebe 162 sowie eine dem Planetengetriebe 162 vorgelagerte Kupplungseinrichtung 164 auf. Die Kupplungseinrichtung 164 ist antriebsseitig über eine als Hohlwelle ausgebildete Verbindungswelle 166 mit dem Modulationsring 62 drehfest verbunden. Abtriebsseitig ist die Kupplungseinrichtung 164 mit der Kupplungsantriebswelle 92 drehfest verbunden. Ein Sonnenrad 168 des Planetengetriebes 162 ist ebenfalls mit der Kupplungsantriebswelle 92 drehfest verbunden. Durch Betätigen der Kupplungseinrichtung 164 zwischen einem geöffneten und einem geschlossenen Zustand und/oder Betätigen einer Bremsvorrichtung 170 am Planetengetriebe 162 kann die Drehrichtung der Kupplungsantriebswelle 92 umgekehrt im Vergleich zur Drehrichtung des Modulationsringes 62 ausgerichtet und somit ein Vorwärts- und Rückwärtsbetrieb der Getriebeanordnung 30 bereitgestellt werden.

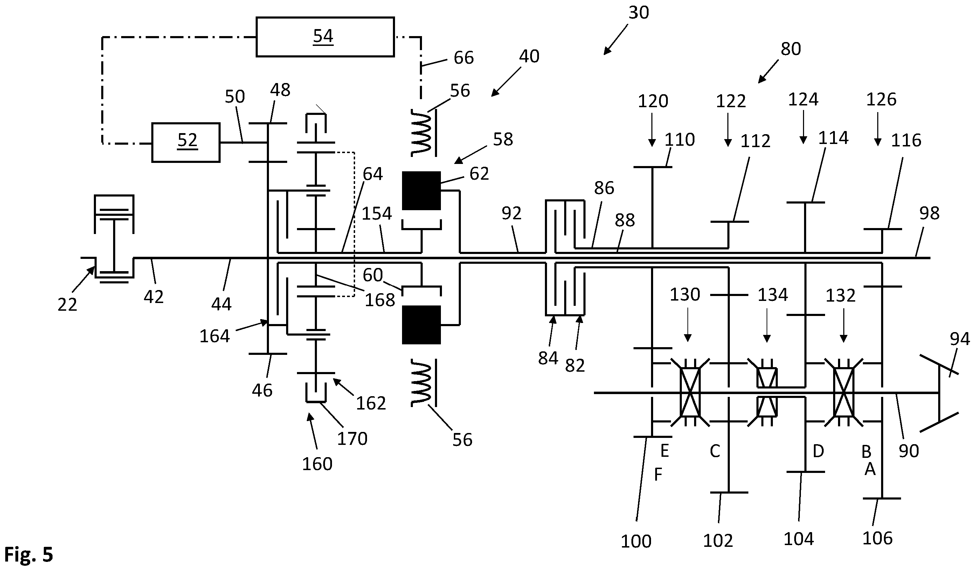

Figur 5 zeigt eine schematische Darstellung, insbesondere ein Strichdiagramm, eines weiteren Ausführungsbeispiels der erfindungsgemäßen Getriebeanordnung 30. Sie unterscheidet sich von der Getriebeanordnung 30 gemäß Figur 3 im Wesentlichen dadurch, dass in der Getriebeeinrichtung 40 die Funktionalität der in Figur 4 bereits offenbarten Getriebestufe 160 zur Drehrichtungsumkehr integriert ist. Allerdings ist die Getriebestufe 160 in Figur 5 im Leistungsfluss zwischen der Elektromaschine 52 und der Umlaufgetriebestufe 58 angeordnet. Dabei ist die Kupplungseinrichtung 164 antriebsseitig mit der Eingangswelle 44 drehfest verbunden ist und abtriebsseitig über die Rotorantriebswelle 154 mit dem Rotor 60 der Umlaufgetriebestufe 58 drehfest verbunden. Das Sonnenrad 168 des Planetengetriebes 162 ist mit der Rotorantriebswelle 154 drehfest verbunden. Durch Betätigen der Kupplungseinrichtung 164 zwischen einem geöffneten und einem geschlossenen Zustand und/oder Betätigen der Bremsvorrichtung 170 am Planetengetriebe 162 kann die Drehrichtung des Rotors 60 umgekehrt im Vergleich zur Drehrichtung der Eingangswelle 44 ausgerichtet werden. Ein Drehrichtungswechsel des magnetischen Rotors 60 kann einen Drehrichtungswechsel des Modulationsringes 62 und somit der Kupplungsantriebswelle 92 generieren oder unterstützen. Hierdurch kann ein Vorwärts- und Rückwärtsbetrieb der Getriebeanordnung 30 bereitgestellt werden.

In einer hier nicht dargestellten weiteren bevorzugten Ausführungsform kann die Getriebeeinrichtung 40 gemäß Figur 5 mit der zweiten Kupplungseinheit 152-2 gemäß Figur 3 ergänzt sein. Diese zweite Kupplungseinheit 152-2 hat dann in Figur 5 bezüglich der Rotorantriebswelle 154 und des Modulationsringes 62 prinzipiell dieselbe Relativanordnung wie bei der Ausführungsform gemäß Figur 3. Diese zweite Kupplungseinheit 152-2 bildet dann in Figur 5 gemeinsam mit der Kupplungseinrichtung 164 die Funktionalität des Anfahrmoduls 150 gemäß Figur 3. Hierdurch bekommt die Kupplungseinrichtung 164 gemäß Figur 5 eine Doppelfunktion und kann bauteilesparend zur Realisierung der Funktionalität eines Anfahrmoduls 150 bei der Getriebeeinrichtung 40 gemäß Figur 5 beitragen.

## Patentansprüche

1. Getriebeanordnung (30) für einen Antriebsstrang (20) eines landwirtschaftlichen Zugfahrzeugs (10), mit einer Eingangswelle (44), einer Ausgangswelle (90), einer Getriebeeinrichtung (40), die Getriebeeinrichtung (40) einen mechanischen Getriebezweig (64) und einen variablen Getriebezweig (66) enthält mit einer magnetisch-elektrischen Umlaufgetriebestufe (58) aufweisend einen inneren Rotor (60), einen äußeren Stator (56) und dazwischen einen rotierbaren magnetischen Modulationsring (62), wobei
- der Modulationsring (62) mit einer Kupplungsantriebswelle (92) der Kupplungen (82, 84) drehfest verbunden oder antriebsmäßig verbindbar ist,
- der Stator (56) der Umlaufgetriebestufe (58) zur Erzielung einer Rotation des Modulationsringes (62) ansteuerbar ist, wobei elektrische Leistung einer mit der Eingangswelle (44) gekoppelten Elektromaschine (52) an den Stator (56) der Umlaufgetriebestufe (58) übertragbar ist, wobei
die Getriebeanordnung eine im Leistungsfluss nachgelagerten Getriebeeinheit (80) aufweist,
welche eine erste Kupplung (82) und eine zweite Kupplung (84) aufweist, **dadurch gekennzeichnet, dass**
die Getriebeeinheit (80) mindestens vier Radsätze (120, 122, 124, 126) zur Einrichtung von Gangstufen (B, C, D, E) aufweist.

2. Getriebeanordnung nach Anspruch 1, **dadurch gekennzeichnet, dass** zur Übertragung der elektrischen Leistung an den Stator (56) und zu dessen Ansteuerung eine Getriebesteuereinheit (54) vorgesehen ist.

3. Getriebeanordnung nach Anspruch 1 oder 2, **dadurch gekennzeichnet, dass** die Getriebeeinheit (80) einen Rückwärtsgang aufweist.

4. Getriebeanordnung nach Anspruch 1 oder 2, **dadurch gekennzeichnet, dass** eine Getriebestufe (160) zur Drehrichtungsumkehr im Leistungsfluss
- zwischen der Elektromaschine (52) und der magnetisch-elektrischen Umlaufgetriebestufe (58) angeordnet ist, oder
- zwischen der magnetisch-elektrischen Umlaufgetriebestufe (58) und der Getriebeeinheit (80) angeordnet ist.

5. Getriebeanordnung nach Anspruch 4, **dadurch gekennzeichnet, dass** die Getriebestufe (160) zur Drehrichtungsumkehr ein Planetengetriebe (162) aufweist.

6. Getriebeanordnung nach Anspruch 5, **dadurch gekennzeichnet, dass** die Getriebestufe (160) zur Drehrichtungsumkehr eine dem Planetengetriebe (162) vorgelagerte Kupplungseinrichtung (164) aufweist.

7. Getriebeanordnung nach einem der vorhergehenden Ansprüche, **dadurch gekennzeichnet, dass** im Leistungsfluss zwischen der Elektromaschine (52) und der magnetisch-elektrischen Umlaufgetriebestufe (58) ein Anfahrmodul (150) zum elektrischen Anfahren angeordnet ist, welches zur wahlweisen Kopplung und Entkopplung einer Antriebsverbindung zwischen der Eingangswelle (44) und/oder der Elektromaschine (52) einerseits und der magnetisch-elektrischen Umlaufgetriebestufe (58) andererseits ausgebildet ist.

8. Getriebeanordnung nach Anspruch 7, **dadurch gekennzeichnet, dass** das Anfahrmodul (150)
- eine Kupplungseinheit (152-1) aufweist, welche antriebsseitig mit der Eingangswelle (44) und/oder der Elektromaschine (52) antriebsverbunden ist und abtriebsseitig über eine Rotorantriebswelle (154) mit dem Rotor (60) der magnetisch-elektrischen Umlaufgetriebestufe (58) drehfest verbunden ist, und/oder
- eine Kupplungseinheit (152-2) aufweist, welche entlang des Leistungsflusses einerseits über eine Rotorantriebswelle (154) mit dem Rotor (60) der magnetisch-elektrischen Umlaufgetriebestufe (58) drehfest verbunden ist und andererseits mit dem Modulationsring (62) drehfest verbunden ist.

9. Getriebeanordnung nach einem der Ansprüche 4 bis 8, **dadurch gekennzeichnet, dass** die antriebsseitig mit der Eingangswelle und/oder der Elektromaschine antriebsverbundene Kupplungseinheit (152-1) des Anfahrmoduls (150) als die Kupplungseinrichtung (164) wirksam ist, welche Bestandteil der zwischen der Elektromaschine (52) und der magnetisch-elektrischen Umlaufgetriebestufe (58) angeordneten Getriebestufe (160) zur Drehrichtungsumkehr ist.

10. Getriebeanordnung nach einem der vorhergehenden Ansprüche, **dadurch gekennzeichnet, dass**
- die erste Kupplung (82) mit einer ersten Getriebeeingangswelle (86) der Getriebeeinheit (80) drehfest verbunden ist und die zweite Kupplung (84) mit einer zweiten Getriebeeingangswelle (88) der Getriebeeinheit (80) drehfest verbunden ist,
- auf der ersten und zweiten Getriebeeingangswelle (86, 88) Festräder (110, 112, 114, 116) drehfest angeordnet sind,
- auf der Ausgangswelle (90) Schalträder (100, 102, 104, 106) drehbar gelagert sind,
- ein erster Radsatz (120) und ein zweiter Radsatz (122) jeweils das Festrad (110, 112) an der ersten Getriebeeingangswelle (86) und jeweils das Schaltrad (100, 102) an der Ausgangswelle (90) aufweisen, und
- ein dritter Radsatz (124) und ein vierter Radsatz (126) jeweils das Festrad (114, 116) an der zweiten Getriebeeingangswelle (88) und jeweils das Schaltrad (104, 106) an der Ausgangswelle (90) aufweisen.

11. Getriebeanordnung nach Anspruch 10, **dadurch gekennzeichnet, dass** ein Schaltelement (134) zum Koppeln zweier Schalträder (102, 104) vorgesehen ist, wobei das Schaltrad (102) des zweiten Radsatzes (122) und das Schaltrad (104) des dritten Radsatzes (124) mit dem Schaltelement (134) derart koppelbar sind, insbesondere derart selektiv koppelbar sind, dass über den zweiten und dritten Radsatz (122, 124) wenigstens eine Windungsgangstufe (A, F) ausbildbar ist.

12. Getriebeanordnung nach Anspruch 11, **dadurch gekennzeichnet, dass** das Schaltelement (134) zwischen einer ersten Schaltstellung, in der das Schaltrad (102) des zweiten Radsatzes (122) und das Schaltrad (104) des dritten Radsatzes (124) gekoppelt sind, und einer zweiten Schaltstellung beweglich ist, in der das Schaltrad (102) des zweiten Radsatzes (122) und das Schaltrad (104) des dritten Radsatzes (124) voneinander gelöst sind.

13. Getriebeanordnung nach einem der Ansprüche 10 bis 12, **dadurch gekennzeichnet, dass** die Getriebeeinheit (80) eines oder mehrere Koppelelemente (130, 132) umfasst, wobei die Schalträder (100, 102, 104, 106) mit einem der Koppelelemente (130, 132) mit der Ausgangswelle (90) drehfest und lösbar verbindbar sind.

14. Getriebeanordnung nach einem der vorhergehenden Ansprüche, **dadurch gekennzeichnet, dass** die Getriebeeinheit (80) sechs Gangstufen (A, B, C, D, E, F) umfasst und/oder der erste und der sechste Gang als Windungsgangstufe (A, F) realisiert sind.

15. Landwirtschaftliches Zugfahrzeug (10) mit einer Getriebeanordnung (30) nach einem der Ansprüche 1 bis 14.

## Claims

1. Transmission arrangement (30) for a drivetrain (20) of an agricultural towing vehicle (10), comprising an input shaft (44), an output shaft (90), a transmission device (40), the transmission device (40) contains a mechanical transmission branch (64) and a variable transmission branch (66) with a magnetic-electrical epicyclic transmission stage (58) comprising an internal rotor (60), an external stator (56) and an interposed rotatable magnetic modulation ring (62), wherein
- the modulation ring (62) is rotationally conjointly connected or is able to be connected in terms of drive to a clutch drive shaft (92) of the clutches (82, 84),
- the stator (56) of the epicyclic transmission stage (58) is able to be actuated to achieve a rotation of the modulation ring (62), wherein electrical power of an electric machine (52) coupled to the input shaft (44) is able to be transmitted to the stator (56) of the epicyclic transmission stage (58), wherein
the transmission arrangement comprises a transmission unit (80) which is arranged downstream in the power flow and
which comprises a first clutch (82) and a second clutch (84), **characterized in that**
the transmission unit (80) has at least four gear sets (120, 122, 124, 126) for establishing gear ratio stages (B, C, D, E).

2. Transmission arrangement according to Claim 1, **characterized in that** a transmission control unit (54) is provided for the transmission of the electrical power to the stator (56) and for the actuation thereof.

3. Transmission arrangement according to Claim 1 or 2, **characterized in that** the transmission unit (80) has a reverse gear.

4. Transmission arrangement according to Claim 1 or 2, **characterized in that**, in the power flow, a transmission stage (160) for reversing a direction of rotation
- is arranged between the electric machine (52) and the magnetic-electrical epicyclic transmission stage (58), or
- is arranged between the magnetic-electrical epicyclic transmission stage (58) and the transmission unit (80).

5. Transmission arrangement according to Claim 4, **characterized in that** the transmission stage (160) for reversing a direction of rotation comprises a planetary transmission (162).

6. Transmission arrangement according to Claim 5, **characterized in that** the transmission stage (160) for reversing a direction of rotation comprises a clutch device (164) positioned upstream of the planetary transmission (162).

7. Transmission arrangement according to one of the preceding claims, **characterized in that** a start-up module (150) for electric start-up is arranged between the electric machine (52) and the magnetic-electrical epicyclic transmission stage (58) in the power flow, said start-up module being configured for the selective coupling and decoupling of a drive connection between the input shaft (44) and/or the electric machine (52) and the magnetic-electrical epicyclic transmission stage (58).

8. Transmission arrangement according to Claim 7, **characterized in that** the start-up module (150)
- comprises a clutch unit (152-1) which is drive-connected to the input shaft (44) and/or to the electric machine (52) on the drive side and is rotationally conjointly connected to the rotor (60) of the magnetic-electrical epicyclic transmission stage (58) by way of a rotor drive shaft (154) on the output side, and/or
- comprises a clutch unit (152-2) which along the power flow is rotationally conjointly connected on one side to the rotor (60) of the magnetic-electrical epicyclic transmission stage (58) by way of a rotor drive shaft (154) and is rotationally conjointly connected on the other side to the modulation ring (62).

9. Transmission arrangement according to one of Claims 4 to 8, **characterized in that** that clutch unit (152-1) of the start-up module (150) which is drive-connected to the input shaft and/or to the electric machine on the drive side is effective as the clutch device (164), which is part of the transmission stage (160) for reversing a direction of rotation arranged between the electric machine (52) and the magnetic-electrical epicyclic transmission stage (58).

10. Transmission arrangement according to one of the preceding claims, **characterized in that**
- the first clutch (82) is rotationally conjointly connected to a first transmission input shaft (86) of the transmission unit (80) and the second clutch (84) is rotationally conjointly connected to a second transmission input shaft (88) of the transmission unit (80),
- fixed wheels (110, 112, 114, 116) are rotationally conjointly arranged on the first and second transmission input shaft (86, 88),
- shift wheels (100, 102, 104, 106) are rotatably mounted on the output shaft (90),
- a first gear set (120) and a second gear set (122) each have the fixed wheel (110, 112) on the first transmission input shaft (86) and each have the shift wheel (100, 102) on the output shaft (90), and
- a third gear set (124) and a fourth gear set (126) each have the fixed wheel (114, 116) on the second transmission input shaft (88) and each have the shift wheel (104, 106) on the output shaft (90).

11. Transmission arrangement according to Claim 10, **characterized in that** a shift element (134) for coupling two shift wheels (102, 104) is provided, wherein the shift wheel (102) of the second gear set (122) and the shift wheel (104) of the third gear set (124) are able to be coupled, in particular selectively coupled, to the shift element (134) in such a way that at least one winding path gear ratio stage (A, F) is able to be formed via the second and the third gear set (122, 124).

12. Transmission arrangement according to Claim 11, **characterized in that** the shift element (134) is movable between a first shift position, in which the shift wheel (102) of the second gear set (122) and the shift wheel (104) of the third gear set (124) are coupled, and a second shift position, in which the shift wheel (102) of the second gear set (122) and the shift wheel (104) of the third gear set (124) are released from one another.

13. Transmission arrangement according to one of Claims 10 to 12, **characterized in that** the transmission unit (80) comprises one or more coupling elements (130, 132), wherein the shift wheels (100, 102, 104, 106) are able to be rotationally conjointly and releasably connected to the output shaft (90) by means of one of the coupling elements (130, 132).

14. Transmission arrangement according to one of the preceding claims, **characterized in that** the transmission unit (80) comprises six gear ratio stages (A, B, C, D, E, F) and/or the first and the sixth gear are implemented as a winding path gear ratio stage (A, F).

15. Agricultural towing vehicle (10) comprising a transmission arrangement (30) according to one of Claims 1 to 14.

## Revendications

1. Ensemble de transmission (30) pour une chaîne cinématique (20) d'un tracteur agricole (10), avec un arbre d'entrée (44), un arbre de sortie (90), un dispositif de transmission (40), le dispositif de transmission (40) contenant une branche de transmission mécanique (64) et une branche de transmission variable (66) avec un étage d'engrenage planétaire (58) magnéto-électrique, comportant un rotor intérieur (60), un stator extérieur (56) et un anneau de modulation (62) magnétique rotatif intercalé entre ceux-ci,
- l'anneau de modulation (62) étant relié de manière solidaire en rotation ou pouvant être relié en entraînement à un arbre d'entraînement d'embrayage (92) des embrayages (82, 84),
- le stator (56) de l'étage d'engrenage planétaire (58) pouvant être piloté pour obtenir une rotation de l'anneau de modulation (62), de la puissance électrique d'une machine électrique (52) couplée à l'arbre d'entrée (44) pouvant être transmise au stator (56) de l'étage d'engrenage planétaire (58),
l'ensemble de transmission comportant une unité de transmission (80) montée en aval dans le flux de puissance,
laquelle comporte un premier embrayage (82) et un deuxième embrayage (84), **caractérisé en ce que**
l'unité de transmission (80) comporte au moins quatre jeux de roues (120, 122, 124, 126) pour le réglage de rapports de vitesse (B, C, D, E).

2. Ensemble de transmission selon la revendication 1, **caractérisé en ce qu'**une unité de commande de transmission (54) est prévue pour transmettre la puissance électrique au stator (56) et pour le pilotage de celui-ci.

3. Ensemble de transmission selon la revendication 1 ou 2, **caractérisé en ce que** l'unité de transmission (80) comporte une marche arrière.

4. Ensemble de transmission selon la revendication 1 ou 2, **caractérisé en ce qu'**un étage d'engrenage (160) destiné à inverser le sens de rotation dans le flux de puissance
- est disposé entre la machine électrique (52) et l'étage d'engrenage planétaire (58) magnéto-électrique, ou
- est disposé entre l'étage d'engrenage planétaire (58) magnéto-électrique et l'unité de transmission (80).

5. Ensemble de transmission selon la revendication 4, **caractérisé en ce que** l'étage d'engrenage (160) comporte un train planétaire (162) pour l'inversion de sens de rotation.

6. Ensemble de transmission selon la revendication 5, **caractérisé en ce que** l'étage d'engrenage (160) destiné à inverser le sens de rotation comporte un dispositif d'embrayage (164) monté en amont du train planétaire (162).

7. Ensemble de transmission selon l'une des revendications précédentes, **caractérisé en ce qu'**est disposé dans le flux de puissance entre la machine électrique (52) et l'étage d'engrenage planétaire (58) magnéto-électrique un module de démarrage (150) pour le démarrage électrique, lequel est formé pour le couplage et le découplage optionnels d'une connexion d'entraînement entre l'arbre d'entrée (44) et/ou la machine électrique (52) d'une part et l'étage d'engrenage planétaire (58) magnéto-électrique d'autre part.

8. Ensemble de transmission selon la revendication 7, **caractérisé en ce que** le module de démarrage (150)
- comporte une unité d'embrayage (152-1), laquelle est reliée en entraînement côté entraînement à l'arbre d'entrée (44) et/ou à la machine électrique (52) et qui est reliée côté sortie au rotor (60) de l'étage d'engrenage planétaire (58) magnéto-électrique par un arbre d'entraînement de rotor (154), et/ou
- comporte une unité d'embrayage (152-2), laquelle est reliée d'une part de manière solidaire en rotation au rotor (60) de l'étage d'engrenage planétaire (58) magnéto-électrique le long du flux de puissance par un arbre d'entraînement de rotor (154) et est reliée d'autre part de manière solidaire en rotation à l'anneau de modulation (62).

9. Ensemble de transmission selon l'une des revendications 4 à 8, **caractérisé en ce que** l'unité d'embrayage (152-1), reliée côté entraînement à l'arbre d'entrée et/ou à la machine électrique, du module de démarrage (150) agit comme dispositif d'embrayage (164) qui fait partie intégrante de l'étage d'engrenage (160) disposé entre la machine électrique (52) et l'étage d'engrenage planétaire (58) magnéto-électrique pour inverser le sens de rotation.

10. Ensemble de transmission selon l'une des revendications précédentes, **caractérisé en ce que**
- le premier embrayage (82) est relié de manière solidaire en rotation au premier arbre d'entrée de transmission (86) de l'unité de transmission (80) et le deuxième embrayage (84) est relié de manière solidaire en rotation à un deuxième arbre d'entrée de transmission (88) de l'unité de transmission (80),
- des roues fixes (110, 112, 114, 116) sont disposées de manière solidaire en rotation sur le premier et le deuxième arbre d'entrée de transmission (86, 88),
- des roues de changement de vitesse (100, 102, 104, 106) sont montées de manière à pouvoir tourner dur l'arbre de sortie (90),
- un premier jeu de roues (120) et un deuxième jeu de roues (122) comportent chacun la roue fixe (110, 112) sur le premier arbre d'entrée de transmission (86) et chacun la roue de changement de vitesse (100, 102) sur l'arbre de sortie (90),
- un troisième jeu de roues (124) et un quatrième jeu de roues (126) comportent chacun la roue fixe (114, 116) sur le deuxième arbre d'entrée de transmission (88) et chacun la roue de changement de vitesse (104, 106) sur l'arbre de sortie (90),

11. Ensemble de transmission selon la revendication 10, **caractérisé en ce qu'**un élément de changement de vitesse (134) est prévu pour accoupler deux roues de changement de vitesse (102, 104), la roue de changement de vitesse (102) du deuxième jeu de roues (122) et la roue de changement de vitesse (104) du troisième jeu de roues (124) pouvant être couplées à l'élément de changement de vitesse (134) de manière telle, en particulier pouvant être couplées de manière sélective de telle manière qu'au moins un rapport de vitesse d'enroulement (A, F) peut être formé par le deuxième et le troisième jeu de roues (122, 124).

12. Ensemble de transmission selon la revendication 11, **caractérisé en ce que** l'élément de changement de vitesse (134) est mobile entre une première position de changement de vitesse, dans laquelle la roue de changement de vitesse (102) du deuxième jeu de roues (122) et la roue de changement de vitesse (104) du troisième jeu de roues (124) sont couplées, et une deuxième position de changement de vitesse, dans laquelle la roue de changement de vitesse (102) du deuxième jeu de roues (122) et la roue de changement de vitesse (104) du troisième jeu de roues (124) sont détachées l'une de l'autre.

13. Ensemble de transmission selon l'une des revendications 10 à 12, **caractérisé en ce que** l'unité de transmission (80) comprend un ou plusieurs éléments de couplage (130, 132), les roues de changement de vitesse (100, 102, 104, 106) pouvant être reliées de manière solidaire en rotation et de manière amovible par l'un des éléments de couplage (130, 132) à l'arbre de sortie (90).

14. Ensemble de transmission selon au moins l'une des revendications précédentes, **caractérisé en ce que** l'unité de transmission (80) comprend six rapports de vitesse (A, B, C, D, E, F) et/ou le premier et le sixième rapport sont réalisés comme un rapport de vitesse d'enroulement (A, F).

15. Tracteur agricole (10) avec un ensemble de transmission (30) selon l'une des revendications 1 à 14.
